# EUROPEAN PATENT APPLICATION

(11) **EP 3 100 982 A1**
(43) Date of publication of application: **07.12.2016**
(21) Application number: 15170470.7
(22) Date of filing: 03.06.2015
(51) Int. Cl.: C02F 1/42, B01J 47/00, C02F 1/68

(54) **DEVICE, METHOD AND SYSTEM FOR TREATING AN AQUEOUS LIQUID AND METHOD OF PREPARING A LIQUID TREATMENT MEDIUM THEREFOR**

(71) Applicant: Brita GmbH, 65232 Taunusstein (DE)
(72) Inventor: Floren, Simon, 65620 Waldbrunn (DE); Merz, Alexandra, 65232 Taunusstein (DE); Kohler, Birgit, 65193 Wiesbaden (DE)
(74) Representative: van Lookeren Campagne, Constantijn August

(57) **Abstract**

A device and a method for treating an aqueous liquid includes a quantity of liquid treatment medium, arranged to contact liquid that has entered the liquid treatment device. The liquid treatment medium includes at least an ion exchange polymer material (11;18;30;45;49;60;73), at least some of which is conditioned to reduce at least one of carbonate hardness, total hardness and total mineral content of water contacting the liquid treatment medium. At least one flavouring compound is sorbed to at least some of the ion exchange polymer material (11;18;30;45;49;60;73).

## Description

The invention relates to a device for treating an aqueous liquid, including a quantity of liquid treatment medium, arranged to contact liquid that has entered the liquid treatment device,
wherein the liquid treatment medium includes at least an ion exchange polymer material, at least some of which is conditioned to reduce at least one of carbonate hardness, total hardness and total mineral content of water contacting the liquid treatment medium.

The invention also relates to a method of treating an aqueous liquid,

The invention also relates to a method of preparing a liquid treatment medium.

WO 2013/090785 A1 discloses a cartridge that may be used in a water filtration system. The cartridge may be provided in cup or pod form and may include a sealing layer sealing an opening in a housing for filling the cartridge. The interior of the cartridge housing may be partitioned into a filtration region or compartment and a supplementation region or compartment. The filtration compartment includes a filtration substance. The supplementation compartment includes a supplementary substance. The filtration region is partitioned from the supplementation region such that liquids entering the filtration region traverse the filtration substance and subsequently enter the supplementation region, traverse the filtration substance before exiting the cartridge. The filtration substance may be a single or mixed bed ion exchange resin to substantially remove salt, ions or minerals from the water. The supplementation substances may include supplementing substances for adding vitamins, tastes, extracts, minerals or pharmaceuticals.

A problem of this cartridge is that the substances must be in a form suitable for controlled release into the liquid, generally requiring them to be formulated with a carrier substance. Arranging such a system in a separate downstream compartment makes inefficient use of the available volume in the cartridge housing. Mixing the supplementing substances with the filtration substances would only go some way towards a more efficient use of the interior volume of the cartridge housing, since only the partition would be dispensed with. Moreover, mixing the supplementing substances with the filtration substances makes the supplementing substances less effective if they are intended to alleviate side-effects of the filtration substances. A particular example is where the supplementing substance is intended to mask unpleasant tastes or odours imparted to the liquid by the filtration substance.

It is an object of the invention to provide a device, liquid treatment system, method of treating a liquid and method of preparing a liquid treatment medium of the types mentioned above in the opening paragraphs that result in a relatively compact device suitable for conditioning the liquid in terms of its mineral composition whilst at least reducing the perceptibility of any unpleasant taste and/or odour of the liquid.

This object is achieved according to a first aspect by the device according to the invention, which is characterised in that at least one flavouring compound is sorbed to at least some of the ion exchange polymer material.

In this context, a flavouring compound is a chemical compound that affects at least one of the chemical senses of taste and smell. The flavouring compounds may be aroma compounds, i.e. chemical compounds that have a smell or odour and are sufficiently volatile to be transported to the olfactory system in the upper part of the nose, at least when present in water. The flavouring compound or compounds sorbed to the ion exchange polymer material elute into the liquid when it contacts the ion exchange polymer material. Thus, any unpleasant taste that the material might otherwise impart to the liquid can at least be masked by the flavouring compound. There is no need to provide a separate compartment for adding flavouring compounds downstream of the ion exchange polymer material, because any liquid that does not contact the material will not acquire the bad taste and any liquid that does will also take up some of the flavouring compound or compounds. There is no need to incorporate the flavouring compound in a separate release system or to provide a dosing device. Thus, for given dimensions of the liquid treatment device, more ion exchange polymer material can be contained in the device. The concentration of the flavouring compound may be below or above the odour threshold value for water, e.g. as determined in accordance with standard DIN 10959 or ISO 13301. For masking purposes, a concentration below the odour threshold value will suffice. The use of flavouring compounds sorbed to the ion exchange polymer material allows such low concentrations to be achieved. Furthermore, the flavouring compound may function as a lifetime indicator, signalling when the ion exchange polymer material's capacity for reducing carbonate hardness, temporary hardness and/or total mineral content has been exhausted. At that stage, most or all of the flavouring compound or compounds will also have been eluted. The different taste of the liquid will thus signal the exhaustion of the ion exchange polymer's capacity.

Polymer ion exchange materials with useable volumetric capacity generally have a large number of functional groups in one chain. The charged groups are hydrophilic in character. To prevent the polymer material from dissolving in water, the polymer ion exchange materials are cross-linked polymer ion exchange materials. In the process of manufacturing them, a relatively large amount of cross-linking compound is often used in order to ensure an adequate degree of cross-linking. Moreover, the cross-linking compound is often impure. Thus, organic compounds generally remain in the ion exchange polymer material and are difficult to remove by rinsing, but perceptible in water treated with the ion exchange material. By sorbing flavouring compounds to the cross-linked polymer ion exchange material as proposed herein, treatment of the polymer ion exchange material to remove the undesirable organic compounds need be less intense. Their taste is masked by the organic flavouring compound or compounds sorbed to the ion exchange polymer material.

It is observed that DE 198 35 542 A1 discloses a method of separating limonene and carvone, in which a solution containing terpenes with respective concentrations of limonene and carvone of several hundred mg/l is contacted with a zeolith without prior pH-adjustment. Adsorption takes place in a hermetically sealed container at 15-40°C over the course of two hours. The carvone remains in the solution. Due to the extremely high volatility of the carvone, it is useful to use an organic adsorbent such as Lewatit (an organic cation exchanger). It is not disclosed that the Lewatit is conditioned to reduce at least one of carbonate hardness, total hardness and total mineral content of water contacting the liquid treatment medium. Furthermore, the purpose is to recover the carvone, not to use the resulting Lewatit to impart a flavour to an aqueous liquid.

In an embodiment of the device according to the invention, the liquid treatment medium includes at least one of:
ion exchange polymer material of which at least a fraction is in the hydrogen form;
ion exchange polymer material of which at least a fraction is in the calcium form; and
ion exchange polymer material of which at least a fraction is in the magnesium form.

This liquid treatment medium including ion exchange polymer material in the hydrogen form is suitable for reducing the carbonate hardness and the total mineral content of water. Furthermore, the liquid is made more acid. In combination with flavouring compounds with e.g. a citrus taste, a fresh taste can be imparted to the liquid.

If the liquid treatment medium includes ion exchange polymer material in the calcium form or magnesium form, a slightly bitter taste is imparted to the liquid. This may be masked by the flavouring compound or complement the taste imparted by the flavouring compound.

In an embodiment, the liquid treatment device includes a housing including:
at least one liquid inlet;
at least one liquid outlet; and
at least one chamber housing the liquid treatment medium, in fluid communication with at least one of the liquid inlets and at least one of the liquid outlets.

The housing helps prevent volatile compounds from evaporating, in particular prior to use of the liquid treatment device. This may be of especial use where the liquid treatment device takes the form of a replaceable liquid treatment cartridge for a gravity-driven or pressurised liquid treatment system. The device is configured such that the liquid treatment medium is retained in at least the housing, preferably the chamber. The liquid is passed through the chamber both to reduce at least one of the carbonate hardness, total hardness and total mineral content and at least to mask any unpleasant taste that would otherwise be imparted to the liquid by the ion exchange polymer material. Because the liquid flows through the liquid treatment medium in the chamber, better-defined contact times with the liquid treatment medium can be achieved, so that any perceptible taste imparted to the liquid is relatively uniform. This stands in contrast to sachets or pads dropped into a tank containiing the liquid, where the frequency with which the tank is emptied may vary.

In a variant, the device is a replaceable liquid treatment cartridge, and the housing is configured for placement in a holder of a liquid treatment system.

After some time, the capacity of at least the ion exchange polymer material to treat liquid in the intended manner will be exhausted. At that point, it is relatively easy to replace the liquid treatment cartridge.

In a variant, the housing is configured for placement in a holder of a throughflow liquid treatment system.

The housing of the liquid treatment cartridge is provided with a sealing element, e.g. a sealing rim, for forming a seal with a cartridge seat provided in the holder. The seal separates the liquid inlets of the cartridge housing from the liquid outlets in flow sense. The holder comprises a reservoir, at an outlet of which the cartridge seat is provided such that liquid leaving the reservoir through the outlet is forced to flow through the liquid treatment cartridge. Gravity and/or a suction pump may cause the liquid to flow through the liquid treatment cartridge.

In an embodiment of the device, the liquid treatment medium is in a granular form.

This embodiment provides relatively good contact between the liquid to be treated and the liquid treatment medium and relatively good kinetics. The bed also provides relatively little resistance to flow compared to e.g. a fluid-permeable porous structure including the liquid treatment medium. Little or no volume is taken up by inactive binder material.

In an embodiment of the device at least one of the at least one flavouring compounds is adsorbed to at least one of the at least one ion exchange polymer materials.

The flavouring compound or compounds is or are bound relatively strongly, providing for sustained release into the liquid to be treated.

In an embodiment of the device, the ion exchange polymer material is a weakly acidic cation exchange material.

In this embodiment, the liquid treatment medium has a relatively high ion exchange capacity per unit of volume and exhibits relatively little swelling on contact with the liquid.

In an embodiment, the at least one flavouring compound includes a flavouring compound for imparting a citrus taste to the liquid.

This embodiment is suitable for imparting a fresh taste to the liquid, in particular where the ion exchange process lowers the pH of the liquid.

In an embodiment, the ion exchange polymer material includes a strongly basic anion exchange material.

These commonly impart a relatively strong unpleasant taste to aqueous liquids treated with the material. This taste is due to amines and almost impossible to prevent by rinsing the ion exchange polymer material. The flavouring compound is of use in masking the unpleasant taste.

According to another aspect, the liquid treatment system according to the invention includes a replaceable liquid treatment cartridge comprising a device according to the invention.

According to another aspect, the method of treating an aqueous liquid according to the invention is characterised by eluting at least one flavouring compound sorbed to at least some of the ion exchange polymer material into the liquid.

The method ensures that the mineral contents of the liquid are tailored to the intended application of the liquid without negatively affecting the taste thereof.

In an embodiment, the pH of the liquid is reduced.

The liquid can thus be given a fresh taste, useful for potable liquids intended to be drunk cold, or at least a reduced carbonate hardness, useful where the liquid is intended to be processed further to prepare flavoured hot beverages. In an embodiment of the method, the liquid treatment medium includes at least one of:
ion exchange polymer material of which at least a fraction is in the hydrogen form;
ion exchange polymer material of which at least a fraction is in the calcium form; and
ion exchange polymer material of which at least a fraction is in the magnesium form.

In an embodiment of the method, the ion exchange polymer material includes a weakly acidic cation exchange material.

This material exhibits relatively little swelling and has a relatively high ion exchange capacity per unit volume.

In an embodiment of the method, a citrus taste is imparted to the liquid.

In an embodiment, the ion exchange polymer material includes a strongly basic anion exchange material.

In an embodiment of the method, the liquid treatment medium is comprised in a bed of granular material and the liquid is passed through the bed.

In this embodiment, relatively good contact with the liquid treatment medium can be assured, so that both the elution and the ion exchange processes are carried out relatively effectively.

In an embodiment, the liquid is provided with a concentration of the flavouring compound below an odour threshold value, e.g. as determined in accordance with at least one of standards ISO 13301 and DIN 10959.

This embodiment has been found suitable for masking bad tastes that would otherwise be imparted to the liquid by the ion exchange polymer material, so that the liquid tastes as if it had not been treated at all.

An embodiment of the method includes the use of a device according to the invention.

According to another aspect, the invention provides a method of preparing a liquid treatment medium including at least an ion exchange polymer material for use in a device according to the invention or a method of treating an aqueous liquid according to the invention,
including a step of sorbing at least one flavouring compound to at least some of the ion exchange polymer material,
wherein the prepared liquid treatment medium includes the ion exchange polymer material having the at least one flavouring compound sorbed thereto and conditioned to reduce at least one of carbonate hardness, total hardness and total mineral content of water contacting the liquid treatment medium.

The liquid treatment medium is configured to reduce at least one of carbonate hardness, total hardness and total mineral content of water contacting the liquid treatment medium without imparting a bad taste to the liquid to be treated.

In an embodiment of the method, the at least one flavouring compound is adsorbed to at least some of the ion exchange polymer material.

The at least one flavouring compound is thus bound relatively strongly, so that sustained release into the liquid to be treated is possible. That is to say that the concentration of the flavouring compound in the treated liquid varies relatively little during use. The (pore) structure of the ion exchange polymer material is less relevant to the take-up of the at least one flavouring compound.

In an embodiment, the at least one flavouring compound is sorbed to the conditioned ion exchange polymer material.

Conditioning the ion exchange polymer material involves exposing it to a solution. By carrying out the conditioning step prior to the sorption step, the at least one flavouring compound is not eluted into the solution.

In an embodiment, the ion exchange polymer material includes a weakly acidic cation exchange polymer material.

The resultant liquid treatment medium has a relatively high ion exchange capacity per unit volume. Furthermore, it exhibits less swelling than most strongly acidic cation exchange materials.

In an embodiment, a liquid treatment medium including a mix of differently conditioned ion exchange polymer materials is provided, e.g. cation exchange polymer material in the hydrogen form and cation exchange polymer material loaded with at least one of at least one alkali metal and at least one alkali earth metal.

This embodiment is useful for providing treated liquid with a relatively consistent pH as the liquid treatment medium is used. The alkali metal may be one of lithium, sodium, and potassium, particularly potassium. A larger proportion by volume in the mix will generally be taken up by the cation exchange polymer material in the hydrogen form than the material in the alkali metal form (hydrogen is not considered to be an alkali metal, although in the same group in the periodic table). The ion exchange polymer material will release relatively large amounts of hydrogen on first exposure to liquid to be treated, which is buffered by the alkali metal that is also released. Later on, less hydrogen will be released and the ion exchange polymer material loaded with the alkali metal will be exhausted. This is especially the case where the ion exchange polymer material is a weakly acidic cation exchange polymer material. The flavouring compound or compounds may be sorbed prior or subsequent to mixing the ion exchange polymer materials. If prior to mixing, some of the ion exchange polymer material may not have any flavouring compound sorbed to it.

In an embodiment, the flavouring compound is sorbed from a solution of the flavouring compound.

In this embodiment, the efficacy of the sorption process can be increased, since larger amounts of liquid are spread over the ion exchange polymer material. The solvent may be water or an alcohol, for example. The solvent may be more volatile than water, e.g. in order to further the production of an aerosol containing the at least one flavouring compound which aerosol is then brought into contact with the ion exchange polymer material.

In an embodiment, the sorption process is carried out at an elevated temperature relative to ambient temperature.

This embodiment is useful for speeding up the sorption process and/or making it more effective. The temperature will generally be controlled to maintain the elevated temperature in a section of an apparatus in which the sorption process is carried out.

In an embodiment, the ion exchange polymer material with the at least one flavouring compound sorbed thereto is mixed with further materials to form the liquid treatment medium.

With this liquid treatment medium, further functions can be provided. These are not impaired by contacting the further materials with at least one of the flavouring compounds. As an example, the further material may include a sorbent for removing certain substances from the liquid that would also take up the flavouring compound if exposed to it, e.g. activated carbon. The further material may also include an ion exchange polymer material, e.g. the same ion exchange polymer material as that to which at least one of the flavouring compounds is sorbed. An example is an ion exchange polymer material coated with an oligodynamic substance that should provide a bacteriostatic effect only when deployed in the liquid treatment device, not at the stage of preparing the liquid treatment medium.

An embodiment of the method includes bringing at least one of the at least one flavouring compounds into at least one of vapour and an aerosol form in at least one gas, wherein the flavouring compound is sorbed to the ion exchange polymer material by bringing the ion exchange polymer material into contact with the gas.

To contact a relatively large volume of ion exchange polymer material with a flavouring compound in liquid form might be relatively expensive, given that only a fraction thereof is sorbed to the ion exchange polymer material. In this embodiment, a relatively small quantity of the flavouring compound is spread over a relatively large amount of ion exchange polymer material. The gas carrying the at least one flavouring compound will penetrate a mass of granular ion exchange polymer material relatively well. It is noted that this embodiment is not limited to the use of a pure gas. A mixture of gases, e.g. air, or a single gas, e.g. nitrogen, may carry the at least one flavouring compound in this embodiment.

In an embodiment, the gas carrying the at least one flavouring compound is provided in a stream through a vessel in which it is brought into contact with the ion exchange polymer material.

This embodiment speeds up the sorption process. Gas with a lower concentration of flavouring compound is replaced by fresh gas with a higher concentration.

In a variant of this embodiment, the stream is recirculated and the at least one flavouring compound is introduced into the recirculating gas stream.

In this variant, a relatively high amount of flavouring compound per unit volume of carrier gas can be provided at a relatively high flow rate in this variant without significant losses of the flavouring compound or the need for a complicated separation of the remaining flavouring compound from the gas stream.

In an embodiment, a liquid including at least one flavouring compound is applied directly to the ion exchange polymer material.

This alternative to the use of flavouring compound in vapour or aerosol form allows for the direct contacting of a larger volume of flavouring compound in liquid form with the ion exchange polymer material. This may be of use where the flavouring compound is relatively inexpensive and/or dissolved in a liquid solvent. A quantity of the ion exchange polymer material, e.g. in granulate form, is coated, e.g. submerged, completely in the liquid. The excess is then drained off.

In a variant of this embodiment, a mix of at least one of the at least one flavouring compounds and the ion exchange polymer material is subjected to mixing in a mechanical mixer.

The mechanical mixer may be a static mixer or a dynamic mixer. Suitable mixers include paddle mixers, V-blenders, ribbon blenders, double cone blenders, drum blenders, screw blenders, etc. The static mixer may be contained in a relatively small vessel, so that less flavouring compound is used. Mixing results in more intimate contact between the ion exchange polymer material and the flavouring compound and may allow for the use of a smaller quantity of flavouring compound.

In an embodiment, at least one of the at least one flavouring compounds is sorbed to the ion exchange polymer material in a batch process.

This allows for relatively long contact times without the need to move ion exchange polymer material through an apparatus at relatively low speed. Where the process involves indirect sorption (i.e. an air stream carrying the flavouring compound or compounds as an aerosol or vapour is brought into contact with the ion exchange material), it is relatively easy to prevent or lessen the undesired escape of the gas or gases carrying the flavouring compound.

In an embodiment of the method, at least one of the at least one flavouring compounds is sorbed to the ion exchange polymer material in a continuous process.

In this embodiment, there is no need to prepare and handle batches of ion exchange polymer material.

In a variant including bringing at least one of the at least one flavouring compounds into at least one of vapour and an aerosol form in at least one gas, wherein the flavouring compound is sorbed to the ion exchange polymer material by bringing the ion exchange polymer material into contact with the gas, the gas is moved through the vessel in countercurrent to a direction of movement of the ion exchange polymer material through the vessel.

This variant provides a degree of mixing that may be enhanced by the use of mechanical mixer, e.g. a static mixer. More intimate contact between the ion exchange polymer and the flavouring compound or compounds results in better sorption to the ion exchange polymer material. Concentration differences play a role where a rate of diffusion would otherwise form a limiting factor. The chosen direction of flow provides the largest possible concentration differences between the gas in direct contact with the ion exchange polymer and that slightly further away.

A similar effect is achieved in an embodiment in which a liquid including at least one flavouring compound is applied directly to the ion exchange polymer material and at least one of the at least one flavouring compounds is sorbed to the ion exchange polymer material in a continuous process, and wherein the liquid is moved through a vessel in countercurrent to a direction of movement of the ion exchange polymer material through the vessel.

The invention will be explained in further detail with reference to the accompanying drawings, in which:
- Fig. 1: is a schematic illustration of a gravity-driven liquid treatment system including a replaceable liquid treatment cartridge comprising a liquid treatment medium, with a reservoir for untreated liquid and the cartridge shown in partial cross-section;
- Fig. 2: is a schematic diagram of an apparatus for preparing at least a component of the liquid treatment medium in a batch process involving indirect application of at least one flavouring compound to ion exchange polymer material;
- Fig. 3: is a schematic diagram of an apparatus for preparing at least a component of the liquid treatment medium in a continuous process involving indirect application of at least one flavouring compound to ion exchange polymer material;
- Fig. 4: is a schematic diagram of an apparatus for preparing at least a component of the liquid treatment medium in a first batch process involving direct application of at least one flavouring compound to ion exchange polymer material;
- Fig. 5: is a schematic diagram of an apparatus for preparing at least a component of the liquid treatment medium in a second batch process involving direct application of at least one flavouring compound to ion exchange polymer material;
- Fig. 6: is a schematic diagram of an apparatus for preparing at least a component of the liquid treatment medium in a first continuous process involving direct application of at least one flavouring compound to ion exchange polymer material;
- Fig. 7: is a schematic diagram of an apparatus for preparing at least a component of the liquid treatment medium in a second continuous process involving direct application of at least one flavouring compound to ion exchange polymer material; and
- Fig. 8: is a schematic diagram of a laboratory-scale setup for preparing at least a component of the liquid treatment medium in a process involving indirect application of at least one flavouring compound to ion exchange polymer material.

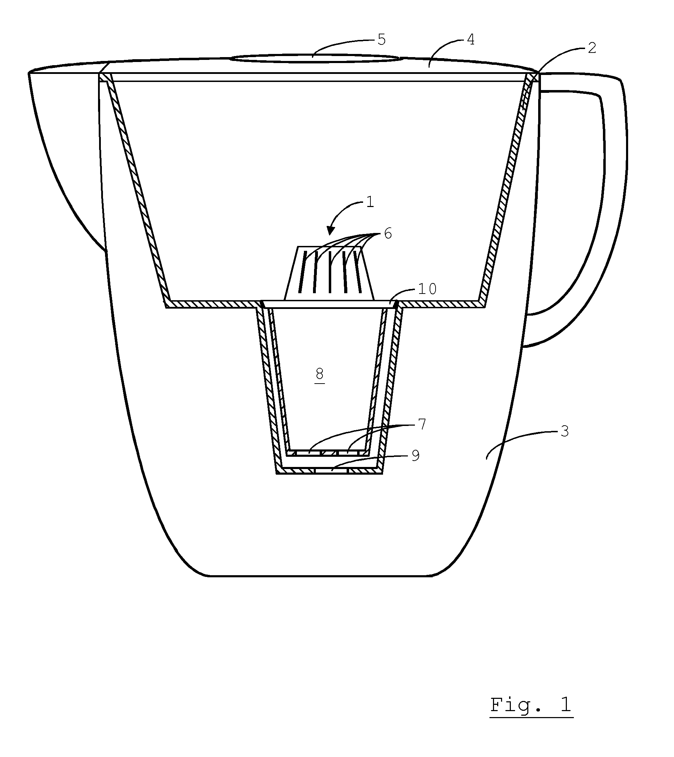

As an example of a liquid treatment system, a gravity-driven liquid treatment system (Fig. 1) includes a replaceable liquid treatment cartridge 1 and a reservoir 2 including a cartridge seat. The reservoir 2 is also commonly referred to as a funnel. The liquid treatment system is, like the other liquid treatment systems discussed here, for the treatment of an aqueous liquid such as tap water.

The reservoir 2 is, in use, suspended in a jug 3 closed by a lid 4 provided with a fill opening normally closed by a closure element 5. A user can remove the lid 4 to replace the cartridge 1 and pour liquid to be treated through the fill opening by causing the closure element 5 to move into a position in which the fill opening is at least partially freed to allow liquid to flow into the reservoir 2.

The cartridge 1 includes a housing made of impermeable material, e.g. a plastic material such as polypropylene. A cap-shaped part is provided with multiple liquid-permeable windows 6 forming liquid inlets. A beaker-shaped part is provided with liquid-permeable windows 7 forming liquid outlets. The beaker-shaped part and the cap-shaped part define a chamber 8 for housing a liquid treatment medium. The liquid treatment medium is in the form of a bed of granular matter. In the illustrated embodiment, the windows 6,7 are sized and/or configured to retain the granular liquid treatment medium within the chamber. In an alternative embodiment, a mesh may be provided within the cap-shaped part. A mechanical filter may be placed over the wall in which the windows 7 forming liquid outlets are provided.

The reservoir 2 includes an integral cartridge seat chamber formed as an appendage to a bottom wall of the reservoir. The cartridge seat chamber has an opening where it transitions into the bottom wall and an outflow opening 9 at an opposite end. An, in use lower, part of the cartridge 1 is insertable into the cartridge seat chamber through the opening such as essentially to seal the opening. To this end, the housing of the cartridge 1 is provided with a circumferential sealing rim 10 for sealingly engaging an upper section of a side wall of the cartridge seat chamber. The sealing rim 10 is provided at a position between the windows 6 forming liquid inlets and the windows 7 forming liquid outlets. The chamber 8 in the cartridge 1 is in fluid communication with the windows 6 forming liquid inlets and the windows 7 forming liquid outlets. Thus, when the cartridge 1 is in the inserted position, liquid in the reservoir 2 is forced through the cartridge, in particular through the bed of granular liquid treatment medium housed in the chamber 8, on its way into the jug 3. The gravity-driven liquid treatment system is thus an example of a throughflow liquid treatment system.

The liquid treatment medium includes an ion exchange polymer material, e.g. a macroporous ion exchange polymer material. At least some of the ion exchange polymer material is conditioned to reduce at least one of carbonate hardness, total hardness and total mineral content of water contacting the liquid treatment medium. If conditioned to reduce the carbonate hardness, and thereby also the total mineral content and the pH of water, the ion exchange polymer material will be in the hydrogen form. It may be a weakly or strongly acidic cation exchange polymer material. Weakly acidic cation exchange polymer material has a relatively large volumetric capacity, making it well-suited for use in a replaceable liquid treatment cartridge 1. When in the hydrogen form, the weakly acidic cation exchange material makes the treated water less acid than a strongly acidic cation exchange material would. The ion exchange polymer material is a cross-linked polymer. The main chain of the polymer may, for example, be sulphonated polystyrene cross-linked with divinylbenzene, polyacrylic acid with divinylbenzene or polymethacrylic acid with divinylbenzene. Other cross-linking agents are conceivable. The polymer carries functional groups that may include, for example, carboxylic and/or phosphonic functional groups.

At least one flavouring compound is adsorbed to at least some of the ion exchange polymer material, in particular the ion exchange polymer material thus conditioned. The liquid treatment medium will generally be a mixture, however. The mixture may include liquid treatment media other than ion exchangers, e.g. activated carbon and/or sorbents for removing one or more heavy metals. The mixture may include ion exchange polymer material without any adsorbed flavouring compound. It may also include ion exchange polymer material with at least one adsorbed flavouring compound that is in another form than the hydrogen form, e.g. loaded with at least one alkali metal ion species or alkali earth metal species. Examples include potassium and magnesium, which may be used for buffering purposes if the majority of the ion exchange polymer material is initially in the hydrogen form.

The flavouring compound or compounds is or are an organic compound. Examples of flavouring compounds include alcohols, aldehydes, acetals, esters, ketones, lactones, maltol derivatives and ketodioxane derivatives, furanones and tetrahydrofurfuryl derivatives, furfuryl and furan derivatives, aliphatica and alicyclic ethers, propenylhydroxybenzenes, allylhydroxybenzenes, capsaicin and related substances and related amides, pyrazine derivatives, aromatic ethers, anthranilate derivatives, pyridine, pyrole and quinoline derivatives, thiazoles, thiophene, thiazoline and thienyl derivatives, aliphatic and aromatic hydrocarbons, epoxides, aliphatic and aromatic amines and amino acids.

The flavouring compounds discussed are generally aroma compounds, i.e. chemical compounds that have a smell or odour and are sufficiently volatile to be transported to the olfactory system in the upper part of the nose, at least when present in water. Generally, molecules meeting this specification have molecular weights below 300 Dalton.

In embodiments for use in treating potable liquids, e.g. water, to be consumed cold, the flavouring compound is a flavouring compound for imparting a citrus taste to water. It may alternatively impart a menthol taste to water. In embodiments for use in treating potable liquids, e.g. water, to be consumed hot, the flavouring compound may be a flavouring compound for imparting a cinnamon taste, a vanilla taste, a caramel taste or a chocolate taste to water. In embodiments for use in treating potable liquids, e.g. water, to be used for cooking purposes, at least one flavouring compound for imparting a taste of at least one herb (garlic, rosemary, thyme, basil) to water may be used.

In use, the flavouring compound or compounds leach into the water treated in the cartridge 1. The concentration is sufficient to mask the taste of any cross-linking agents also leaching into the liquid. In an embodiment, the concentration of each flavouring compound in water treated with the liquid treatment medium is just below the odour threshold value as defined in standard ISO 13301 or DIN 10959. Several methods are suitable for preparing the ion exchange polymer material having one or more flavouring compounds sorbed to it. They start with the ion exchange polymer material already in the conditioned form. That is to say that the intended counterions are already in place, e.g. the ion exchange polymer material is already in the hydrogen form if intended for use in lowering the carbonate hardness of water. The ion exchange polymer material is also in the intended granular form at this stage.

Two basic types of method are proposed, namely methods involving direct adsorption of flavouring compounds through contact with a liquid and methods involving indirect adsorption of flavouring compounds. In methods of the former type, the liquid may be a solution of the flavouring compound or the flavouring compound in pure liquid form. In methods of the latter type, the flavouring compound or compounds is or are brought into at least one of vapour and aerosol form in a gas or gas mixture, and the gas or gas mixture is brought into contact with the ion exchange polymer.

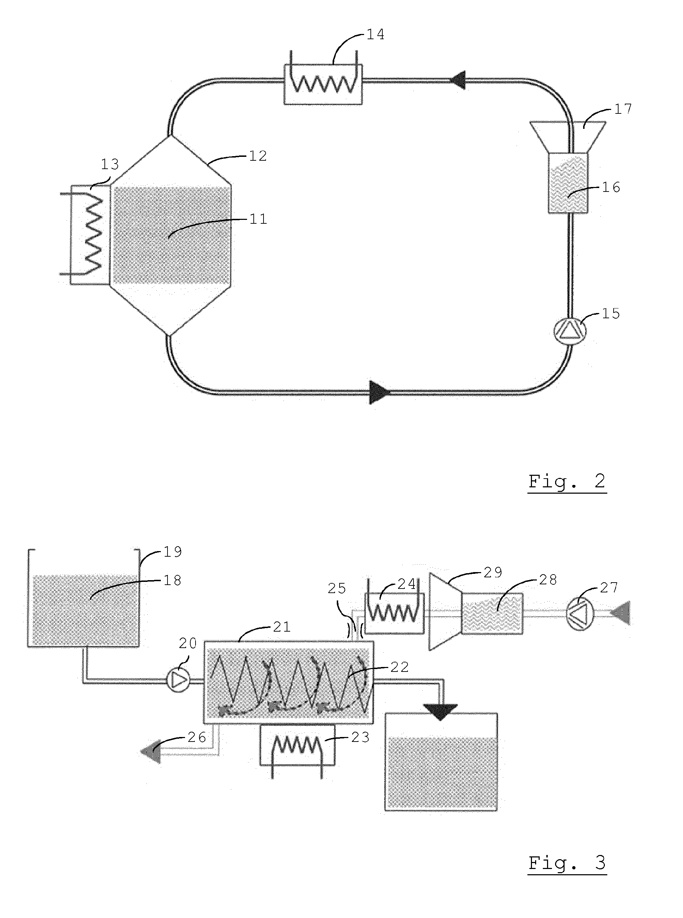

A first apparatus (Fig. 2) for the preparation of the ion exchange polymer material with at least one flavouring compound sorbed thereto is arranged to implement a method of the indirect type, in this case in a batch process. A quantity of granular ion exchange polymer material 11 is placed in a vessel 12 with gas-permeable inlets and outlets. The vessel 12 is configured to retain the ion exchange polymer material 11. In an embodiment, a stirrer (not shown) may be arranged in the vessel 12. A first temperature-maintaining unit 13 is arranged to keep the interior of the vessel 12 at a set temperature, which may be an elevated temperature with respect to ambient or room temperature. A second temperature-maintaining unit 14 is arranged to keep a gas flow into the vessel 12 at a set temperature, which may be an elevated temperature with respect to ambient or room temperature. The gas flow may be a flow of air. The gas flow is circulated by a circulator pump 15, which forces it through a flavouring compound solution 16 in a dosing device 17. The dosing device 17 may comprise a nebuliser, pump or venturi scrubber, for example. At least one of the flavouring compound or compounds and the solvent may be a volatile compound having a boiling point below e.g. 25° C.

A second apparatus (Fig. 3) for the preparation of the ion exchange polymer material with at least one flavouring compound sorbed thereto is arranged to implement a method of the indirect type in a continuous process. Conditioned ion exchange polymer material 18 is placed in a first vessel 19. A screw pump 20 or other feeding device pumps the granular material through a mixing chamber 21 including a static mixer 22. The mixing chamber 21 is provided with at least one gas inlet and at least one gas outlet, arranged at opposite ends of the mixing chamber 21, such that the gas or gas mixture flows counter to the direction of movement of the ion exchange polymer material 18 through the mixing chamber 21. A first temperature-maintaining unit 23 keeps the interior of the mixing chamber 21 at a set temperature, which may be an elevated temperature with respect to ambient or room temperature. A second temperature-maintaining unit 24 is arranged to keep the gas flow into the mixing chamber 21 at a set temperature, which may be an elevated temperature with respect to ambient or room temperature. A valve 25 controls the rate of flow of the gas or gases through the mixing chamber 21. In the illustrated embodiment, the gas leaving the mixing chamber 21 is lost through a vent 26. In an alternative embodiment, a circulator pump similar to that of the first apparatus (Fig. 2) is used. In the illustrated embodiment, a pump 27 pumps air or another gas or gas mixture through a flavouring compound solution 28 in a dosing device 29. Again, the dosing device 29 may comprise a nebuliser, pump or venturi scrubber, for example. At least one of the flavouring compound or compounds and the solvent may be a volatile compound having a boiling point below e.g. 25° C.

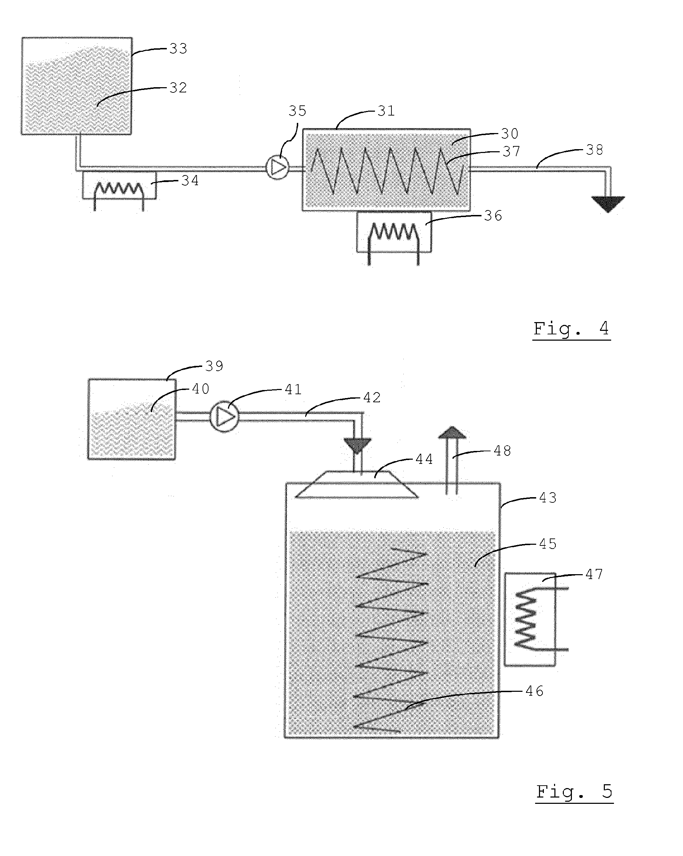

A third apparatus (Fig. 4) for the preparation of the ion exchange polymer material with at least one flavouring compound sorbed thereto is arranged to implement a method of the direct type in a batch process. Conditioned ion exchange polymer material 30 in granular form is placed in a mixing chamber 31. A flavouring compound solution 32 is placed in a tank 33. In an alternative embodiment, at least one concentrated flavouring compound is dosed into a solvent stream in an appropriate device (e.g. an injector), so that the tank 33 need contain only the solvent. A first temperature-maintaining unit 34 keeps the flavouring compound solution at a set temperature, which may be an elevated temperature with respect to ambient or room temperature. A pump 35 pumps the flavouring compound solution through the mixing chamber 31. A second temperature-maintaining unit 36 is arranged to keep the interior of the mixing chamber 31 at a set temperature, which may be an elevated temperature with respect to ambient or room temperature. The mixing chamber 31 includes a static or dynamic mixer 37 for increasing the contact between the ion exchange polymer material 30 and the flavouring compound solution. In an embodiment, the mixing chamber 4 and the mixer 37 form a continuous stirred-tank reactor. The flavouring compound solution 32 passes into a drain conduit 38, but may be recovered.

A fourth apparatus (Fig. 5) for the preparation of the ion exchange polymer material with at least one flavouring compound sorbed thereto is also arranged to implement a method of the direct type in a batch process. It also includes a tank 39 for a flavouring compound solution 40 and a pump 41 in a supply conduit 42 to a mixing vessel 43. More precisely, the supply conduit 42 leads to an injector unit 44, e.g. a spraying unit. As in the third apparatus (Fig. 4), an alternative embodiment may make use of a device for dosing at least one concentrated flavouring compound into a solvent stream, so that the tank 39 need contain only the solvent. Conditioned granular ion exchange polymer material 45 is placed in the mixing vessel 43. In the illustrated embodiment, the mixing vessel 43 includes a static or dynamic mixer 46. A temperature-maintaining unit 47 keeps the interior of the mixing vessel 43 at a set temperature, which may be an elevated temperature with respect to ambient or room temperature. An optional vent 48 allows solvent vapour to escape in order to prevent excessive pressure build-up. After a certain period of time, the mixing vessel 43 is emptied of the granular ion exchange polymer material with the flavouring compound or compounds adsorbed to it.

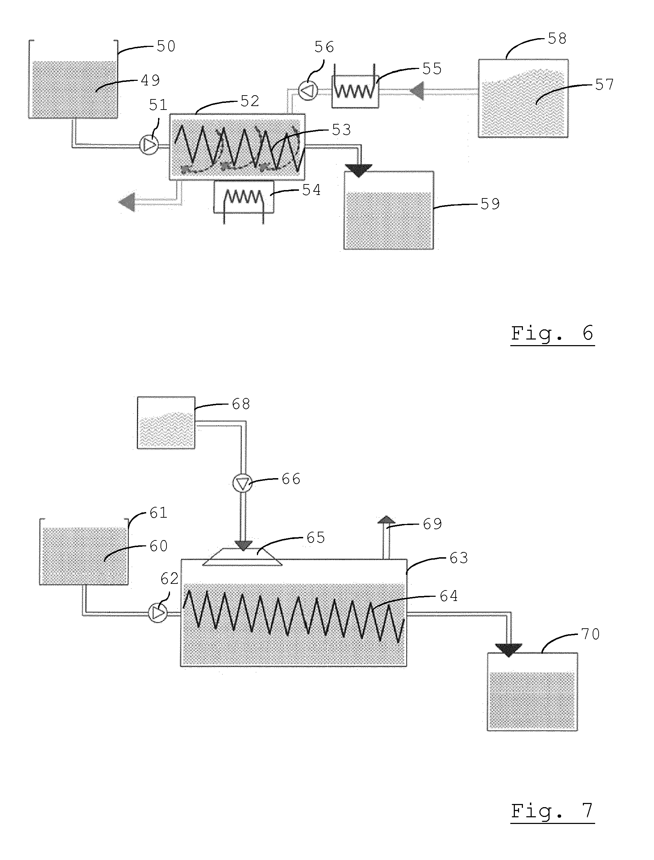

A fifth apparatus (Fig. 6) for the preparation of the ion exchange polymer material with at least one flavouring compound sorbed thereto is arranged to implement a method of the direct type in a continuous process. Conditioned ion exchange polymer material 49 is placed in a first vessel 50. A screw pump 51 or other feeding device pumps the granular material through a mixing chamber 52 including a static mixer 53. In an alternative embodiment, it may include a dynamic mixer. The mixing chamber 52 is provided with at least one liquid inlet and at least one liquid outlet, arranged at opposite ends of the mixing chamber 52, such that liquid flows counter to the direction of movement of the ion exchange polymer material 49 through the mixing chamber 52. A first temperature-maintaining unit 54 keeps the interior of the mixing chamber 52 at a set temperature, which may be an elevated temperature with respect to ambient or room temperature. A second temperature-maintaining unit 55 is arranged to keep the liquid flow into the mixing chamber 52 at a set temperature, which may be an elevated temperature with respect to ambient or room temperature. A pump 56 pumps a flavouring compound solution 57 from a tank 58 to and through the mixing chamber 52. An alternative embodiment may make use of a device for dosing at least one concentrated flavouring compound into a solvent stream, so that the tank 58 need contain only the solvent. In the illustrated embodiment, the solution leaving the mixing chamber 52 is drained or collected. In an alternative embodiment, at least a fraction may be recirculated. The granular ion exchange polymer material 49 with the flavouring compound adsorbed to it leaves the mixing chamber 52 to be collected in a second vessel 59.

A sixth apparatus (Fig. 7) for the preparation of the ion exchange polymer material with at least one flavouring compound sorbed thereto is arranged to implement a method of the direct type in a continuous process. Conditioned ion exchange polymer material 60 is placed in a first vessel 61. A screw pump 62 or other feeding device pumps the granular material through a mixing chamber 63 including a static mixer 64. In an alternative embodiment, it may include a dynamic mixer. An injector unit 65, e.g. a sprayer, is arranged to inject flavouring compound solution into the interior of the mixing chamber 63. A pump 66 pumps a flavouring compound solution 67 from a tank 68 to the injector unit 65. An alternative embodiment may make use of a device for dosing at least one concentrated flavouring compound into a solvent stream, so that the tank 68 need contain only the solvent. An optional vent 69 allows solvent vapour to escape in order to prevent excessive pressure build-up. The granular ion exchange polymer material 60 with the flavouring compound adsorbed to it leaves the mixing chamber 63 to be collected in a second vessel 70.

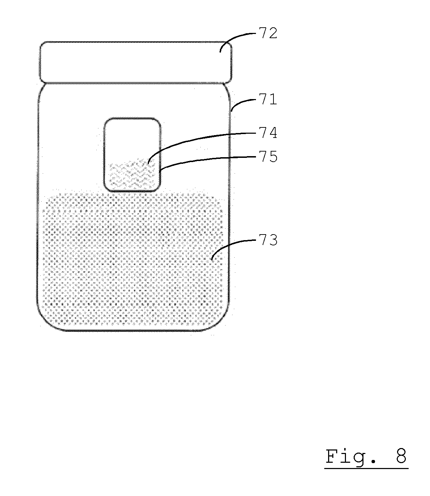

Both the indirect and direct methods for the preparation of the ion exchange polymer material with at least one flavouring compound sorbed thereto were tested on a laboratory scale. The set-up for the indirect method (Fig. 8) included a wide mouth vessel 71 made of glass, hermetically sealed at the top by a lid 72. The volume of the wide mouth vessel 71 was approximately 200 ml. It was filled with approximately 70 ml of ion exchange polymer material, in this case Lewatit CNP C, available from Lanxess. This is a food-grade, weakly acidic macroporous cation exchange resin. The polymer matrix is comprised of cross-linked polyacrylate. It has carboxylic acid as the functional groups and is conditioned to be in the hydrogen form. The material is in granular form, 90 % of the beads having a diameter in the range of 0.4 - 1.6 mm. Tests were carried out with three types of flavouring compound 74, namely isoamyl acetate, also known as banana oil, red currant aroma (4-methoxy-2-methyl-2-butanethiol) and lemon aroma containing limonene and citral. Isoamyl acetate is an ester of isoamyl alcohol and acetic acid and tastes of bananas. In each test, the flavouring compound 74 was placed in a small wide mouth vessel 75, open at the top, which was placed on top of the ion exchange polymer material 73. About 2 ml of the flavouring compound 74 were placed in a small wide mouth vessel 75 with a volume of approximately 20 ml. The illustrated set-up was placed in a temperature chamber held at 30° C for a period of twenty-four hours. Thereupon, the ion exchange polymer material was mixed with activated carbon and silver-coated ion exchange polymer material. The volumetric ratio by dry volume was 70 parts treated ion exchange polymer material to 30 parts of the remaining liquid treatment medium. 140 ml of the liquid treatment medium thus obtained were placed in a cartridge of the type illustrated in Fig. 1 and used to treat ordinary tap water.

The set-up for the direct method used the same ion exchange polymer material, the same flavouring compounds 74 and the same wide mouth vessel 71. In this method, 2 ml of concentrated flavouring compound 74 were applied directly to 70 ml of the ion exchange polymer material before closing the lid 72 to seal the wide mouth vessel 71. The vessel 71 was then shaken and again left at approximately 30° C for twenty-four hours. It was subsequently mixed with activated carbon and silver-coated ion exchange polymer material in the same ratio as in the indirect method and 140 ml of the resulting liquid treatment material were placed in a liquid treatment cartridge of exactly the same type as in the indirect method. This cartridge was then used to treat tap water.

There were thus six cartridges with differently-prepared liquid treatment medium inside. Each cartridge was submerged in tap water before use in order to soak the liquid treatment medium and allow it to swell. It was then used in a system as illustrated in Fig. 1, wherein the first three litres of treated water were discarded and the fourth to sixth litres of water were used in sensory tests.

A first sensory test was a descriptive profiling test involving two schooled test persons and led to the result shown in Table 1.

**Table 1.**

| Flavouring compound | Taste |
|---|---|
| Red currant, direct method | distinct taste in water |
| Red currant, indirect method | well-perceptible taste in water |
| Lemon, direct method | noticeable taste in water |
| Lemon, indirect method | slight taste in water |
| Isoamyl acetate, direct | noticeable in water |
| Isoamyl acetate, indirect | slight taste in water |

The two samples were also used in a discrimination test of the triangle type, further involving a standard cartridge without any flavouring compounds. The test persons were randomly selected employees of the applicant. In a test with ion exchange polymer material prepared using the indirect method and red currant flavouring, the deviating sample was detected in 10 out of 21 cases, which is significant (significance level 0.2). In a test with ion exchange polymer material prepared using the direct method and lemon flavouring, the deviating sample was detected in 8 out of 21 cases.

The tests demonstrate in principle that the methods outlined herein are suitable for preparing a liquid treatment medium including ion exchange polymer material with at least one flavouring compound adsorbed thereto that can be used to impart a perceptible taste to tap water and certainly to mask any unpleasant taste that might otherwise be imparted to the water by the ion exchange polymer material. The effect was achieved even though activated carbon was admixed to the ion exchange polymer material. The effect will be even stronger where a device as described herein includes a liquid treatment medium including only sorbents in the form of ion exchange materials or at least no sorbents, such as activated carbon, for removing organic compounds from aqueous liquids.

The invention is not limited to the embodiments described above, but may be varied within the scope of the accompanying claims.

The device for treating an aqueous liquid need not be a replaceable cartridge for a gravity-driven liquid treatment system but may alternatively be a suction cartridge for placement in a reservoir of a device provided with a suction pump such that the reservoir is emptied through the cartridge. As yet another alternative, the device may be a cartridge for a pressure-driven liquid treatment system. Such a cartridge is provided with a cartridge head for insertion into a head device in a conduit that forces the liquid flowing through the conduit to pass into and out of the cartridge.

### List of reference numerals

- 1: - cartridge
- 2: - reservoir
- 3: - jug
- 4: - lid
- 5: - closure element
- 6: - liquid-permeable windows forming liquid inlets
- 7: - liquid-permeable windows forming liquid outlets
- 8: - chamber
- 9: - outflow opening
- 10: - sealing rim
- 11: - ion exchange polymer material
- 12: - vessel
- 13: - first temperature-maintaining unit
- 14: - second temperature-maintaining unit
- 15: - circulator pump
- 16: - flavouring compound solution
- 17: - dosing device
- 18: - ion exchange polymer material
- 19: - first vessel
- 20: - screw pump
- 21: - mixing chamber
- 22: - static mixer
- 23: - first temperature-maintaining unit
- 24: - second temperature-maintaining unit
- 25: - valve
- 26: - vent
- 27: - pump
- 28: - flavouring compound solution
- 29: - dosing device
- 30: - ion exchange polymer material
- 31: - mixing chamber
- 32: - flavouring compound solution
- 33: - tank
- 34: - first temperature-maintaining unit
- 35: - pump
- 36: - second temperature-maintaining unit
- 37: - mixer
- 38: - drain conduit
- 39: - tank
- 40: - flavouring compound solution
- 41: - pump
- 42: - supply conduit
- 43: - mixing vessel
- 44: - injector unit
- 45: - ion exchange polymer material
- 46: - mixer
- 47: - temperature-maintaining unit
- 48: - vent
- 49: - ion exchange polymer material
- 50: - first vessel
- 51: - screw pump
- 52: - mixing chamber
- 53: - static mixer
- 54: - first temperature-maintaining unit
- 55: - second temperature-maintaining unit
- 56: - pump
- 57: - flavouring compound solution
- 58: - tank
- 59: - second vessel
- 60: - ion exchange polymer material
- 61: - first vessel
- 62: - screw pump
- 63: - mixing chamber
- 64: - static mixer
- 65: - injector unit
- 66: - pump
- 67: - flavouring compound solution
- 68: - tank
- 69: - vent
- 70: - second vessel
- 71: - wide mouth vessel
- 72: - lid
- 73: - ion exchange polymer material
- 74: - flavouring compound
- 75: - small wide mouth vessel

## Claims

1. Device for treating an aqueous liquid, including a quantity of liquid treatment medium, arranged to contact liquid that has entered the liquid treatment device,
wherein the liquid treatment medium includes at least an ion exchange polymer material (11;18;30;45;49;60;73), at least some of which is conditioned to reduce at least one of carbonate hardness, total hardness and total mineral content of water contacting the liquid treatment medium,
**characterised in that**
at least one flavouring compound is sorbed to at least some of the ion exchange polymer material (11;18;30;45;49;60;73).

2. Device according to claim 1,
wherein at least one of the at least one flavouring compounds is adsorbed to at least one of the at least one ion exchange polymer materials (11;18;30;45;49;60;73).

3. Device according to claim 1 or 2,
wherein the ion exchange polymer material (11;18;30;45;49;60;73) includes a weakly acidic cation exchange material.

4. Device according to any one of the preceding claims,
wherein the ion exchange polymer material (11;18;30;45;49;60;73) includes a strongly basic anion exchange material.

5. Liquid treatment system including a replaceable liquid treatment cartridge (1) comprising a device according to any one of claims 1-4.

6. Method of treating an aqueous liquid, including:
contacting a quantity of liquid treatment medium including at least an ion exchange polymer material (11;18;30;45;49;60;73) with the liquid,
wherein at least one of carbonate hardness, total hardness and total mineral content of the liquid is reduced through the contact with the liquid treatment medium, **characterised by**
eluting at least one flavouring compound sorbed to at least some of the ion exchange polymer material (11;18;30;45;49;60;73) into the liquid.

7. Method according to claim 6,
wherein the liquid is provided with a concentration of the flavouring compound below an odour threshold value.

8. Method according to claim 6 or 7,
including the use of a device according to any one of claims 1-4.

9. Method of preparing a liquid treatment medium including at least an ion exchange polymer material for use in a device according to any one of claims 1-4 or a method according to any one of claims 6-8,
including a step of sorbing at least one flavouring compound to at least some of the ion exchange polymer material (11;18;30;45;49;60;73),
wherein the prepared liquid treatment medium includes the ion exchange polymer material (11;18;30;45;49;60;73) having the at least one flavouring compound sorbed thereto and conditioned to reduce at least one of carbonate hardness, total hardness and total mineral content of water contacting the liquid treatment medium.

10. Method according to claim 9,
wherein the at least one flavouring compound is adsorbed to at least some of the ion exchange polymer material (11;18;30;45;49;60;73).

11. Method according to claim 9 or 10,
wherein the at least one flavouring compound is sorbed to the conditioned ion exchange polymer material (11;18;30;45;49;60;73).

12. Method according to any one of claims 9-11,
wherein the flavouring compound is sorbed from a solution (16;28;32;40;57;67) of the flavouring compound.

13. Method according to any one of claims 9-12,
including bringing at least one of the at least one flavouring compounds into at least one of vapour and an aerosol form in at least one gas,
wherein the flavouring compound is sorbed to the ion exchange polymer material (11;18;73) by bringing the ion exchange polymer material into contact with the gas.

14. Method according to claim 13,
wherein the gas carrying the at least one flavouring compound is provided in a stream through a vessel (12;21) in which it is brought into contact with the ion exchange polymer material (11;18).

15. Method according to any one of claims 9-14,
wherein a liquid (32;40;57;67) including at least one flavouring compound is applied directly to the ion exchange polymer material (30;45;49;60;73).
